Europäisches Patentamt

European Patent Office

Office européen des brevets

(11) Publication number: **0 221 867**
A2

# EUROPEAN PATENT APPLICATION

(21) Application number: 86850321.0

(22) Date of filing: 22.09.86

(51) Int. Cl.⁴: **B 23 P 11/00**
E 21 B 17/00, E 21 B 17/04

(30) Priority: 08.10.85 SE 8504654

(43) Date of publication of application:
13.05.87 Bulletin 87/20

(84) Designated Contracting States:
AT BE CH DE FR GB IT LI LU NL

(71) Applicant: SKF STEEL AB
P O Box 202
S-813 00 Hofors(SE)

(72) Inventor: Sundberg, Staffan
Agatan 56
S-813 00 Hofors(SE)

(72) Inventor: Kullman, Ralf
Vikgatan 2D
S-149 00 Nynäshamn(SE)

(74) Representative: Barnieske, Hans Wolfgang
c/o H.W. Barnieske Patentbyrä AB P.O. Box 25
Turingegatan 26
S-151 21 Södertälje 1(SE)

(54) A method of constructing a pump rod by joining sucker rods for drawing up oil and sucker rods, coupling elements and an assembly tool for performing the method.

(57) The present invention relates to a method and means for constructing a pump rod for drawing up oil, the rod moving to and fro in a shaft extending down to an oil source. The pump rod is composed of a plurality of sucker rods (4) having smooth, cylindrical end sections. The sucker rods (4) are placed end to end with each other, whereafter a coupling element (5) consisting of a radially deformable inner sleeve (6, 22) with a conical outer surface and an inner surface surrounding the rod ends, and an outer sleeve (7) with a conical inner surface having substantially the same conicity as the outer surface of the inner sleeve (6, 22), being applied over two adjacent end sections. The inner sleeve (6, 22) and the outer sleeve (7) are then caused, with the aid of an assembly tool (8), to move in axial direction with respect to each other, so that the inner sleeve (6, 22) is pressed radially inwards by the outer sleeve (7) to form a friction joint between two adjacent sucker rods (4).

The invention also relates to sucker rods (4), coupling elements (5) and an assembly tool (8) for performing the method described above.

FIG. 2

EP 0 221 867 A2

The invention relates to a method of constructing a pump rod moving to and fro in an oil well, rod elements or sucker rods being joined together by means of coupling elements to form the pump rod. The invention also relates to sucker rods, coupling elements and an assembly tool for use in performing the method.

A system known as the sucker rod system is the most usual and the oldest method of drawing oil up to ground level from a source underground. The system comprises a drive unit located above ground which moves a pump rod to and fro. The pump rod is connected to a plunger in a pump house immersed in the oil well. The pump rod consists of rod elements or sucker rods joined together. Each rod has a standard length of 7.5 - 9 m (25 - 30'). Conventionally these sucker rods are provided at the ends with screw threading and are connected by coupling sleeves provided with internal screw threads. These sleeves are screwed onto the last element in the pump rod under construction, after which a new sucker rod is screwed into the coupling sleeve. A key section, usually with quadratic cross section, is provided close to the end section with the screw thread. The sucher rod is tightened to a predetermined torque. Tightening is performed manually with the aid of a wrench provided with shaft and jaws, the jaws being applied around the key section of the sucker rod.

Such conventional sucker rod systems have many deficiencies. Manufacturing costs for the sucker rods are relatively high since the ends of the cylindrical starting material must undergo several work stages. The end portions must be upset, for instance, to provide the key and threaded portions. If cutting methods are used to produce the threaded sections, this will interrupt alignment within the material as well as producing sharper transitions at the thread bases. This will lead to stress concentrations and reduced strength. Attempts have been made to counteract this in recent years by manufacturing the threads by means of cold-rolling and careful polishing. However, this increases manufacturing costs for the sucker rods due to the extra work required and high tool costs. Certain materials lose valuable properties if they are subjected to plastic treatment and sucker rods made of such materials must therefore be heat-treated after the upsetting operations. In some cases such materials cannot by used at all.

The use of screw joints in the environments concerned, often extremely acid, also entails increased risk of corrosion, particularly in the case of strongly corrosive crude oils. This results in stress indications reducing the service life of the sucker rods and requiring frequent repairs. Materials otherwise suitable cannot therefore be used in view of this risk.

Great care is required to ensure that the threads are not damaged or soiled during transport to or storage and handling at the oil field. The ends of the sucker rods must therefore be well protected.

Furthermore, in practice the prescribed tightening torque is difficult to achieve. The torque is therefore either too low so that the coupling loosens, or too high, entailing high stress in the joint which in turn leads to premature fatigue failure and reduced service life.

The object of the invention is to remedy or alleviate the drawbacks to the known methods.

This is achieved in that sucker rods are used which, at least at the end sections, are smooth and cylindrical, the rods being arranged end to end, and a coupling element consisting of a radially deformable inner sleeve with a conical outer surface and an inner surface surrounding the rod ends, and an outer sleeve with a conical inner surface having substantially the same conicity as the outer surface of the inner sleeve being applied over the two end sections facing each other, and in that the inner sleeve and the outer sleeve are caused with the aid of an assembly tool to move in axial direction with respect to each other, so that the inner sleeve is pressed radially inwards by the outer sleeve to form a friction joint between two adjacent sucker rods.

Since the pump rod is composed of smooth, cylindrical sucker rods which need not be subjected to subsequent treatment, materials such as stainless steel can be selected, having properties which would be deteriorated by cold-working. Futhermore, the stress concentration in the rods will be lower, resulting in increased service life or enabling the sucker rods to be made slimmer than conventional sucker rods with the same service life. The sucker rods also ensure jolts and blows better than conventional sucker rods, nor are they as sensitive to soiling. Since the sucker rods can by manufactured and finished in a steel rolling mill their material properties can be better controlled than if they must first be manufactured in a steel rolling mill, thereafter machined to the desired shape and finally be subjected to heat-treatment.

The double-sleeved friction joint used to connect the cylindrical sucker rods reduces the risk of corrosion, thus offering greater freedom in the choice of materials for coupling element and rod. Another important advantage is that, with the aid of the sleeve coupling and assembly tool, a friction joint with well controlled pressure transfer is possible. This is achieved in that the assembly tool by means of which the outer and inner sleeves of the coupling element are moved axially in relation to each other, may also include control means to interrupt the movement. These control means may comprise either pressure means which curtail the movement at a predetermined pressure, or mechanical stops. Some embodiments of the invention will be described in the following with reference to the accompanying drawings in which

Figure 1   shows one end of a conventional sucker rod,

Figure 2   shows a schematic longitudinal section through sucker rods, coupling element and an assembly tool used for performing the method according to the invention,

Figure 3   shows the assembly tool seen from above and applied on a sucker rod,

Figure 4   shows a longitudinal section through a second embodiment of a coupling element according to the invention, and

Figure 5   shows in perspective an inner sleeve forming a part of the coupling element shown in Figure 4.

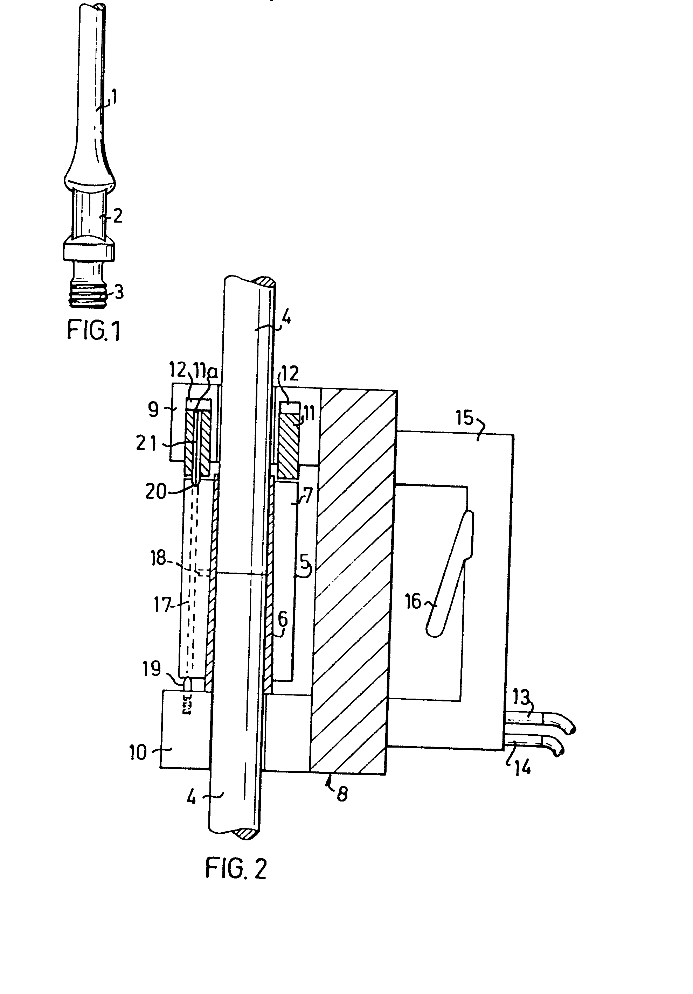

Figure 1 shows a conventional sucker rod 1, comprising a long rod with upset ends. Each end section comprises a key section 2 having substantially quadratic cross section, and a section 3 provided with screw threading. When two sucker rods are to be joined, a coupling sleeve with internal screw threading is screwed onto one sucker rod and the other sucker rod is then screwed into the coupling sleeve. Final tightening is effected with the aid of an assembly wrench having jaws and shaft.

As can be seen in Figure 2, when performing the method according to the invention, smooth, cylindrical rod elements or sucker rods 4 are used, the rods being arranged end to end. A double-sleeved coupling element 5 is fitted around the ends of the sucker rods to be connected. The coupling element 5 comprises a circular inner sleeve 6, the inner surface of which surrounds the sucker rod and the outer surface of which is conical. An outer sleeve 7 with conical inner surface then surrounds the inner sleeve 6. Said surfaces should have substantially the same conicity. The inner sleeve 6 is slightly longer than the outer sleeve 7 and protrudes on both sides of the outer sleeve 7. The assembly and dismantling tool 8 is then used to move the outer sleeve 7 to move relative the inner sleeve 6 so that the outer sleeve 7 presses the radially deformable inner sleeve 6 in against the ends of the sucker rods. The clamping pressure thus increases in proportion to the relative displacement between the sleeves 6 and 7. When sufficient clamping pressure has been achieved, the displacement movement is discontinued and the assembly tool removed. The combined pump rod is then lowered into the shaft a distance corresponding to the length of the sucker rod. The coupling procedure can then be repeated until the pump rod has acquired the desired length.

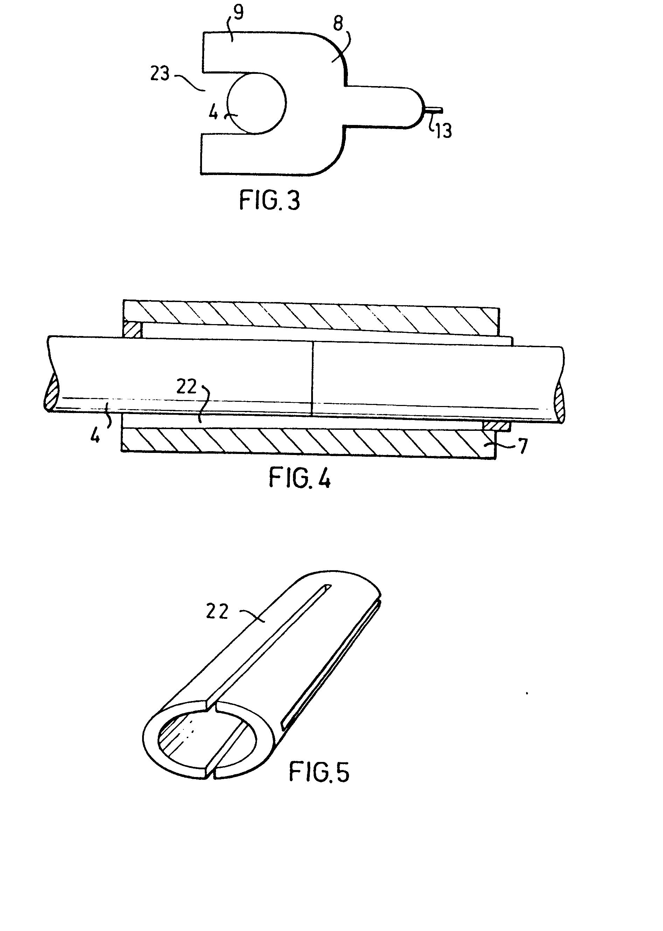

The assembly tool 8 comprises two parallel flanges, un upper flange 9 and a lower flange 10, rigidly joined together. The axial gap between the flanges 9, 10 is thus greater than the length of a coupling element. Each flange 9, 10 is provided with an open recess 23, see Figure 3, which is slightly wider than the diameter of the sucker rod 4. The upper flange 9 contains a plurality of pressure chambers 12 in which plungers 11, 11a are displaceable. By way of conduits, not shown, inside the assembly tool 8, and an external hose connection 13, the pressure chambers 12 can be connected to an external pressure source, not shown.

The pressure chambers 12 can also be connected to an outlet pipe 14. The assembly tool 8 includes a handle 15 on which an operating lever 16 is provided. This actuates a valve (not shown) which places the pressure chambers in communication with the external pressure source when the lever 16 is pressed towards the handle 15.

When the coupling element 5 is to be clamped against the ends of the sucker rods the assembly tool 8 is placed so that the rods 4 fit into the recesses 23 in the flanges 9, 10. The lower flange 10, forming a support, is in contact with the lower end of the inner sleeve 6 protruding from the outer sleeve 7. The lever 16 is then actuated, placing the pressure chambers 12 in communication with the external pressure source whereupon the plungers 11, 11a, arranged radially outside the inner sleeve 6, are moved towards the outer sleeve 7, displacing this axially relative the inner sleeve 6. The pressure supply is discontinued when the sleeve has been displaced sufficiently far. This is preferably effected automatically by a pressure-limiting valve, for instance, being set to limit the pressure in the pressure supply circuit to a certain value corresponding to the desired clamping pressure between inner sleeve 6 and sucker rod 4. Position transducers sensing the position of the plungers 11, 11a may be used instead of the pressure-limiting valve, in which case the transducer emits a signal when the plungers have travelled sufficiently far. The signal is utilized to discontinue the supply of pressure fluid to the pressure chambers 12.

In the embodiment shown the outer sleeve 7 is provided with an oil channel 17 running axially through it and communicating via a branch channel 18 with the inner surface of the outer sleeve 7. During assembly and dismantling pressurized oil is inserted between the outer surface of the inner sleeve 6 and the inner surface of the outer sleeve 7. The oil layer thus produced facilitates the relative movement of the two sleeves. The lower flange 10 is provided with a spring-loaded plug 19, the assembly tool 8 being placed so that the plug 19 closes the lower opening of the oil channel 17. One of the plungers 11a is provided with an injection piston 20 located axially opposite the plug 19. The injection piston 20 closes the upper opening of the channel 17 and, via an insert 21 in the plunger 11a, communicates with the relevant pressure chamber. When this pressure chamber 12 has been pressurized, oil will flow between the sleeves, after which the plungers 11, 11a will displace the outer sleeve 7 along the inner sleeve 6 as described earlier.

The coupling element is dismantled equally easily by inverting the tool 8 so that the flange 10 is against the upper end of the inner sleeve 6 and the plungers 11, 11a exert pressure on the lower end of the outer sleeve 7.

An alternative to the coupling element described above is shown in Figures 4 and 5. This comprises an outer sleeve 7 and inner sleeve 22. The inner sleeve 22 is provided with axial slits in order to facilitate radial deformation. As with the coupling element described in connection with Figure 2, the outer surface of the inner sleeve 22 and the inner surface of the outer sleeve 7 are conical. The inner sleeve will therefore be pressed inwards against the sucker rods 4, thus locking them by means of friction, when the outer sleeve 7 is displaced along the inner sleeve 6. An assembly tool similar to that shown in Figure 2 is used. In this case the tool includes no oil injection piston nor sealing plug.

## C l a i m s

1.  A method of constructing a pump rod moving to and fro in an oil well, rod elements or sucker rods being joined together by means of coupling elements to form the pump rod, wherein sucker rods (4) are used which, at least at the end sections, are smooth and cylindrical, the rods being arranged end to end, and a coupling element (5) consisting of a radially deformable inner sleeve (6, 22) with a conical outer surface and an inner surface surrounding the rod ends, and an outer sleeve (7) with a conical inner surface having substantially the same conicity as the outer surface of the inner sleeve (6, 22) being applied over the two end sections facing each other, and wherein the inner sleeve (6, 22) and the outer sleeve (7) are caused with the aid of an assembly tool (8) to move in axial direction with respect to each other, so that the inner sleeve (6, 22) is pressed radially inwards by the outer sleeve (7) to form a friction joint between two adjacent sucker rods.

2.  A method according to claim 1, wherein an oil space is formed between the outer surface of the inner sleeve (6) and the inner surface of the outer sleeve (7) before the inner sleeve (6) and the outer sleeve (7) are caused to move in relation to each other.

3.  A method according to claim 2, wherein the outer sleeve (7) has an axially running channel (17), open at both ends, and a side channel (18) leading from the channel (17) to the inner surface of the outer sleeve (7), one opening of the channel (17) being closed before oil is introduced through the other opening to form an oil space between the inner sleeve (6) and outer sleeve (7).

4.     Rod elements, sucker rods, for producing a connected pump rod for drawing up oil, wherein at least the end sections of the sucker rods (4) are in the form of smooth, cylindrical surfaces.

5.     A rod element according to claim 4, wherein said rod element (4) consists of a smooth, cylindrical rod.

6.     A coupling element for connecting rod elements, sucker rods, to form a connected pump rod for drawing up oil, wherein said coupling element (5) comprises a radially deformable inner sleeve (6, 22) having a conical outer surface and an outer sleeve (7) surrounding the inner sleeve, the outer sleeve having a conical inner surface substantially in agreement with the conicity of the outer surface of the inner sleeve (6).

7.     A coupling element according to claim 6, wherein the inner sleeve (22) is provided with longitudinal slits.

8.     A coupling element according to claim 6, wherein the outer sleeve (8) comprises a conducting means (17, 18) leading from the outer surface of the outer sleeve (7) to its inner surface.

9.     A coupling element according to claim 8, wherein the conducting means comprise a channel (17) running axially through the outer sleeve (7) and a side channel (18) running between the channel (17) and the inner surface of the outer sleeve (7).

10.     An assembly tool for effecting relative movement between the inner sleeve (6, 22) and the outer sleeve in a double-sleeved coupling element (5) for connecting two sucker rods (4) to form a pump rod for drawing up oil, wherein said tool (8) comprises two flanges (9, 10) permanently joined together and spaced apart a distance greater than the axial length of the coupling element (5), that each flange (9, 10) is provided with an open recess (23) having a width greater than the diameter of the sucker rod (4), the recesses (23) of the flanges (9, 10) being located axially one above the other and one flange (9) holding axially displaceable plungers (11, 11a).

11. An assembly tool according to claim 10, wherein the plungers (11, 11a) are displaced by means of a pressure fluid, the tool (8) including supply means (13) and discharge means (14) for the pressure fluid.

12. An assembly tool according to claim 11, wherein the plungers (11, 11a) comprise an axially protruding oil-injection piston (20) which is in communication with the plungers (11, 11a) influencing the pressure fluid and the flange (10) which is not provided with plungers (11, 11a) comprising an axially protruding, positioning and sealing plug (19), aligned with the oil-injection piston (20).

13. An assembly tool according to claims 10 - 12, wherein said tool includes a handle (15).

14. A pump rod for drawing up oil from an oil well to ground level, comprising a plurality of sucker rods (4) and coupling elements (5) by means of which the sucker rods (4) are connected together to form the pump rod, wherein at least the ends of the sucker rods (4) have a smooth, cylindrical, outer surface.

15. A pump rod according to claim 14, wherein the sucker rods (4) consist of smooth, cylindrical rods.

FIG.1

FIG. 2

FIG. 3

FIG. 4

FIG.5